Europäisches Patentamt

European Patent Office

Office européen des brevets

(19)

(11) Publication number: 0 297 196
A1

## EUROPEAN PATENT APPLICATION

(12)

(21) Application number: 87830126.6

(22) Date of filing: 03.04.87

(51) Int. Cl.⁴: **B29C 33/30 , B29C 49/48**

The title of the invention has been amended (Guidelines for Examination in the EPO, A-III, 7.3).

(43) Date of publication of application:
**04.01.89 Bulletin 89/01**

(84) Designated Contracting States:
**DE ES FR IT**

(71) Applicant: **CHELL SNC**
**Via dell'Industria 59**
**Marzabotto (Bologna)(IT)**

(72) Inventor: **Tonelli, Lauro**
**via Solari 4**
**Bologna(IT)**
Inventor: **Piana, Dante**
**via San Donato 77**
**Bologna(IT)**

(74) Representative: **Sassatelli, Franco T., Dr.**
**c/o INIP via Ruggi 5**
**I-40137 Bologna(IT)**

(54) Mould for manufacturing plastics objects having different heights and mouthpieces.

(57) The system employs three essential components for pressing respectively determining: the initial component (1) the container bottom, the intermediate one (4) for the elevated part with constant section, and the end one (7) for the tapering part letting into the mouth. For adjusting the height of the press shape, one or more printing parts (12 and 13) are fitted in outline prosecution; in this way, the container section remains constant, but the capacity changes. The end component (7) in its upper central seat (9) is foreseen fitted with a printing part of the mouth piece, and - if changed - the press can be suited to the different types of mouth pieces to carry out.

FIG. 5

**"Press for carrying out containers in plastic materials with different height and mouthpiece"**

The invention refers to a system allowing to carry out containers in plastic materials with different height and mouthpiece shape by adopting a press to fit with changing geometry. By employing different composition of the installation parts, many container types can be obtained with different capacities and conformations of the mouthpiece, allowing in this way design and employ variety of the shutting means. The installation mainly permits to carry out a set of containers with graduated capacities.

The exigency of personalize one's own production at present brings the concern to perform different original manufacturing forms according to the different products: in this way, the ready identification with image comparison is granted and the favourable acceptance increased. For each one of these products, containers of different capacity are required. To form each one of these containers, at present a specific forming press is required which causes high installation costs. The invention enables to considerably reduce these costs by adopting only one installation allowing to fit one press to suit the employ requirements.

Substantially, the system carries out a variable forming mould with both essential and not essential components in composition. For mount ing, three essential determining components are employed: the initial one for the container bottom, the intermediate elevation part with constant section, and the end tapering one that leads to the mouth piece. For the height adjustment of the printing form, one or more press parts are fitted in shape prosecution of the said forming piece with constant section: in this way, containers with constant section are formed with assures that the basic design is still persisting, whereas the capacity is changed. This solution is particularly used for carrying out conventional sets of containers for the same product with different containing degree. In its central upper seat, the essential shape foresees a printing part of the mouth piece which, if modified, allows to manufacture containers arranged for different closure types. This permits a manufacture with different designs.

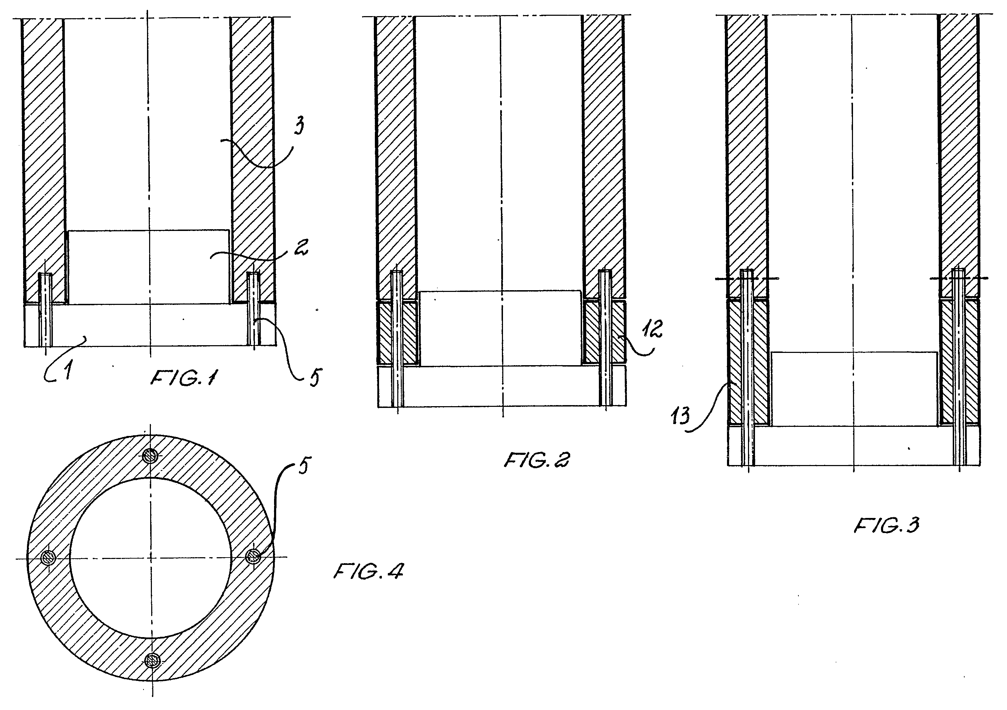

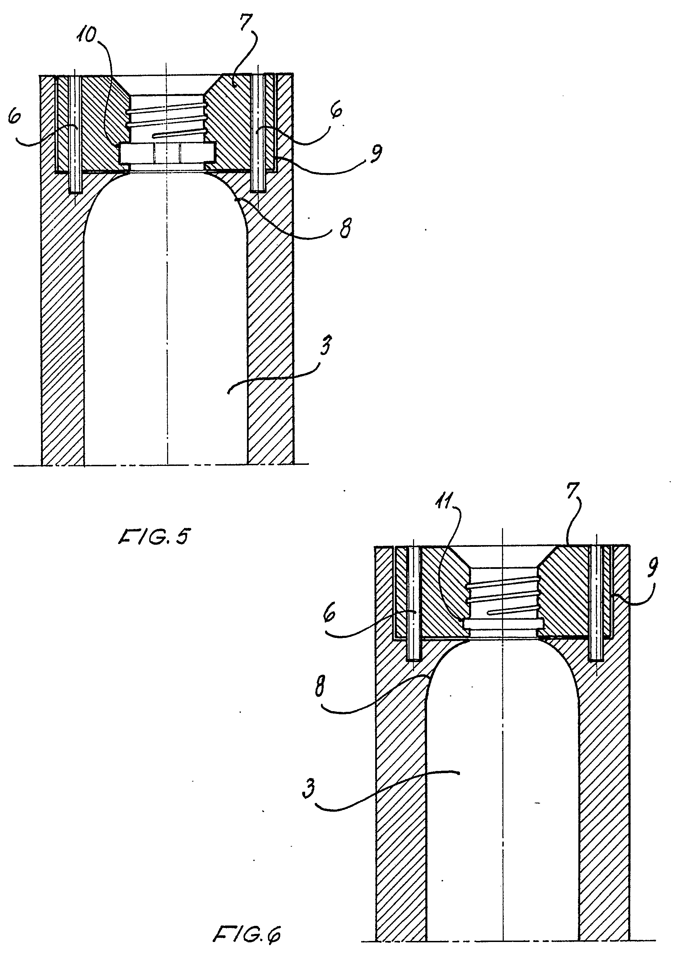

The system is illustrated in a merely indicative way by the drawings of tables 1 and 2. With reference to these drawings, fig. 1 is the view of the lower part of a press which in composition employs only the essential components of the bottom and of the elevation part with constant section. Fig. 2 is the view of the lower part of another printing combination which employs - interposed among the essential forming components of the bottom and of the elevated parts with constant section - an additional printing part with shape prosecution for maintaining the constant printing section. Fig. 3 is the view of the lower part of a third printing combination which employs a further printing part with shape prosecution higher than the one foreseen in fig. 2, interposed between the two essential bottom components and the ones of the raised part with constant section. Fig. 4 is the view of the transversal section of the essential intermediate component showing the threaded fixing pivots. In fig. 5 of table 2 the upper part of a forming press can be seen which consists of two essential components: the intermediate and the end ones, the latter of which with a part fitted in its seat for printing the container mouth piece. Fig. 6 is the view of the higher part of the shaping press employs the same two essential compo nents as foreseen in the previous figure, but with a shaping part imposed in its seat for the container mouth piece different from the previous one.

The version employs a bottom essential shaping part consisting of the base 1 with axial part 2 to introduce into the lower side, to beating limit, in the chamber with constant section 3 of the intermediate part 4 with constraint allowed by the four threaded pivots 5. The essential shape of the press is completed by fitting the essential end part 7 with similar threaded pivots 6; its lower part is tapering 8 and above has seat 9 for imposing the mouth piece forming part. For changing the mouth piece, the version employs respectively forming parts 10 and 11. To change the press height, the additional interposable parts 12 and 13 are foreseen.

The system can be used for manufacturing containers in plastic materials of different kind and, in particular, bottles and vessels of different shapes and sizes.

## Claims

1) Press for carrying out containers in plastic materials with different height and mouthpiece, characterized by the fact that its shape is changed by employing essential and not essential components in composition. For mounting, three essential determining components are used: the initial one with base (1) and axial part (2), the container bottom, the intermediate one (4), the containing raised part with constant section, and the end tapering one (7) that leads to the mouthpiece. For the height adjustment of the printing form, one or more press parts (12 and 13) are fitted in shape continuance of the above forming part with constant section: in this way, container with constant section are obtained assuring the continuance of the base design, whereas their capacities are changed. The essential shape foresees a press par (7) for the mouth piece fitted in the central seat (9), by changing which pressing part, containers can be obtained suitable for different closure types.

FIG.3

FIG.2

FIG.4

FIG.1

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | BRITISH PLASTICS, vol. 44, no. 5, May 1971, pages 96-106; J. BURBIDGE et al.: "Blow mould design for bottles and technical parts" * Page 101, figure 2 * | 1 | B 29 C 33/30 B 29 C 49/48 |
| X | PATENT ABSTRACTS OF JAPAN, vol. 4, no. 108 (M-24)[590], 5th August 1980, page 25 M 24; & JP-A-55 67 417 (YOSHINO KOGYOSHO K.K.) 21-05-1980 * Abstract * | 1 | |
| X | CH-A- 519 977 (BOSCH) * Figures 1,2 * | 1 | |
| A | US-A-3 214 506 (CORBIN) | | |
| A | US-A-2 989 776 (STRONG) | | |
| A | PLASTICS & RUBBER, vol. 10, no. 3, June 1985, page 30, London GB; "Clever idea is 25 years old" | | TECHNICAL FIELDS SEARCHED (Int. Cl.4) |
| A | MODERN PLASTICS INTERNATIONAL, vol. 16, no. 3, March 1986, page 24, Lausanne, CH; M. RUDOLPH: "Many, many sizes from a single mold" | | B 29 C |
| A | EP-A-0 149 292 (REINFELD) | | |
| A | AU-B- 495 726 (LANGECKER) | | |
| A | FR-A-2 171 930 (SOCIETE RHONE-PROGIL) | | |
| A | FR-A-2 245 460 (CAUBET) | | |

The present search report has been drawn up for all claims

| Place of search | Date of completion of the search | Examiner |
|---|---|---|
| THE HAGUE | 22-07-1988 | ROBERTS P.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)